Europäisches Patentamt

(19) European Patent Office

Office européen des brevets

(11) Publication number: **0 310 447 B1**

# (12) EUROPEAN PATENT SPECIFICATION

(45) Date of publication of patent specification :
27.12.91 Bulletin 91/52

(51) Int. Cl.⁵ : **F16H 61/46**

(21) Application number : 88309157.1

(22) Date of filing : 03.10.88

(54) Method of speed reduction ratio control in continuously variable speed transmission.

(30) Priority : 02.10.87 JP 249590/87
05.11.87 JP 279633/87

(43) Date of publication of application :
05.04.89 Bulletin 89/14

(45) Publication of the grant of the patent :
27.12.91 Bulletin 91/52

(84) Designated Contracting States :
DE FR GB IT

(56) References cited :
EP-A- 0 239 365
JP-A-56 095 722
JP-A-63 053 343
JP-A-63 053 344

(73) Proprietor : HONDA GIKEN KOGYO
KABUSHIKI KAISHA
1-1, 2-chome Minami-Aoyama
Minato-ku Tokyo (JP)

(72) Inventor : Ishikawa, Yoshikazu
1486-332, Ozaz-Ishizaka Hatoyama-machi
Hiki-gun Saitama (JP)
Inventor : Sasajima, Koji
1-30-14, Ikebukurohoncho
Toshima-ku Tokyo (JP)

(74) Representative : Tomlinson, Kerry John et al
Frank B. Dehn & Co. European Patent
Attorneys Imperial House 15-19 Kingsway
London WC2B 6UZ (GB)

## Description

This invention relates to a method of controlling a speed reduction ratio in a continuously variable speed transmission for a vehicle.

So far there have been generally used the following methods for speed control of the continuously variable speed transmission : selecting as a reference value (a) engine speed, (b) change rate of engine speed, or (c) speed reduction ratio and controlling the speed reduction ratio so as to follow the reference value.

These control methods, however, do not take the acceleration caused by the reserved power of the engine into account. As a result, the speed reduction ratio according to the control methods tends to be larger or smaller than expected, thus at a low vehicle speed causing : (a) time — lag and unfavorable feeling produced by the time — lag (poor response) because of a small change rate of the speed reduction ratio during ratio control toward greater speed reduction ratio, (b) poor fuel consumption or unfavorable feelings accompanying an excessive increase of engine speed during ratio control toward smaller speed reduction ratio, (c) hunting of the engine speed because of a small change rate of the speed reduction ratio during ratio control toward greater speed reduction ratio, and (d) poor fuel consumption associated with poor efficiency due to excessive reduction of the speed reduction ratio during deceleration.

Therefore, the applicant proposed a method for solving these problems which comprises : calculating a change rate of speed reduction ratio by summing up a component corresponding to a predicted acceleration and a component corresponding to a reference change rate of the engine speed, and controlling speed reduction ratio based on the calculated change rate of speed reduction ratio (as exemplified by Japanese Patent laid-open Publications No. 63(1988)-53343 and No. 63(1988)-53344 etc.).

In the above control method, however, if the change rate of speed reduction ratio is calculated based on level road running, the actual engine speed will deviate from the reference engine speed because of the difference in running resistances during running ascending or descending a slope. More specifically, in ascending a slope the actual engine speed tends to be under the reference speed, while in descending a slope the actual engine speed tends to be over the reference speed.

Many continuously variable speed transmissions employ clutch means which can control transmission of engine power. In the partially engaged state of the clutch means, since the whole engine power is not directly transmitted to the transmission, such speed control as described above cannot be applied. For this reason, in the prior art, the speed control is divided into one for "during clutch engagement" and the other for "after clutch engagement completion". As an example of the clutch control, for instance, as disclosed in Japanese Patent laid-open Publication No. 56(1981)-95722, clutch opening is controlled based on engine throttle opening, engine speed and vehicle speed.

But, in the case where the speed reduction ratio is controlled in the two stages, "during clutch engagement" and "after clutch engagement completion", it is difficult to smoothly shift the clutch engagement control stage to the post clutch engagement completion control stage and to smoothly start the speed reduction ratio control, because it is not easy to identify the exact time of clutch engagement completion, thus deteriorating the driver's feeling. And, for the speed reduction ratio control, such a control has been employed as to set a reference engine speed corresponding to an accelerator opening and to make the engine speed follow the reference engine speed. But, if the determination of clutch engagement completion is inaccurate, the start of the speed reduction ratio control based on the reference engine speed may be delayed, thus resulting in momentary abrupt increase of the engine speed or insufficient feeling of acceleration.

## SUMMARY OF THE INVENTION

It is an object of the present invention to provide a method for controlling speed reduction ratio in which a change rate of speed reduction ratio is calculated with such correction as to minimize the effect of running resistance variations on ascending or descending slopes.

Further, it is another object and purpose of the present invention to provide a method for controlling speed reduction ratio in which the control in the two stages (stage of "during clutch engagement control" and stage of "after clutch engagement completion") is continuously and smoothly performed.

And, the objects of the present invention are fulfilled by providing the following methods :

The first method comprises : determining a predicted acceleration $dV_o/dt$ calculated from reserved power of an engine, a reference change rate $dN_o/dt$ of engine speed obtained based on a parameter representing a driver's intention to accelerate or decelerate, an actual vehicle speed V, an actual acceleration $dV/dt$ and an actual engine speed N, computing a change rate $di/dt$ of speed reduction ratio by the following equation using the above values

2

$$di/dt = -C_1*(N/V^2)*(dV_0/dt)+C_2*(1/V)*(dN_0/dt)+C_3*(N/V^2)*(dV_0/dt-dV/dt)$$

where, $C_1$, $C_2$ and $C_3$ are constants,
and controlling the speed reduction ratio of a continuously variable speed transmission based on the above computed change rate di/dt. ("*" mark means multiplication)

The second method comprises ; determining a predicted acceleration $dV_0/dt$ calculated from reserved power of an engine, a reference change rate $dN_0/dt$ of engine speed obtained based on a parameter representing a driver's intention to accelerate or decelerate, an actual vehicle speed V, an actual engine speed N, and a transmission rate KcL of engine power through a clutch, computing a change rate di/dt of speed reduction ratio by the following equation using the above values

$$di/dt = -C_4*(N/V^2)*(dV_0/dt)*Kcl+C_5*(1/V)*(dN_0/dt)$$

where, $C_4$ and $C_5$ are constants,
and controlling the speed reduction ratio of a continuously variable speed transmission based on the above computed change rate di/dt.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

## DESCRIPTION OF THE DRAWINGS

The present invention will become more fully understood from the detailed description given hereinbelow and the accompanying drawings which are given by way of illustration only, and thus are not limitative of the present invention and wherein :

FIG. 1 is a hydraulic circuit diagram of a continuously variable speed transmission of which speed reduction ratio is controlled by a method according to the invention ;

FIG. 2 is a cross sectional view of ratio control servo units of the aforesaid continuously variable speed transmission ;

FIG. 3 is a cross sectional view of a clutch-control servo unit of aforesaid continuously variable speed transmission ;

FIG. 4 is a flow chart showing clutch control ;

FIG. 5A and 5B are graphs for obtaining reference clutch opening and clutch opening control speed respectively ;

FIG. 6 is a flow chart showing speed reduction ratio control associated with the first embodiment ;

FIG. 7 and 8 are graphs showing maps for obtaining engine power and reference change rate of the engine speed respectively ;

FIG. 9 is a flow chart showing a subroutine for obtaining corrective component D(di/dt) in the above speed reduction ratio control ;

FIG. 10 is a flow chart illustrating speed reduction ratio control in the second embodiment ; and

FIG. 11 is a graph showing a map for obtaining transmission rate of the clutch.

## DESCRIPTION OF PREFERRED EMBODIMENTS

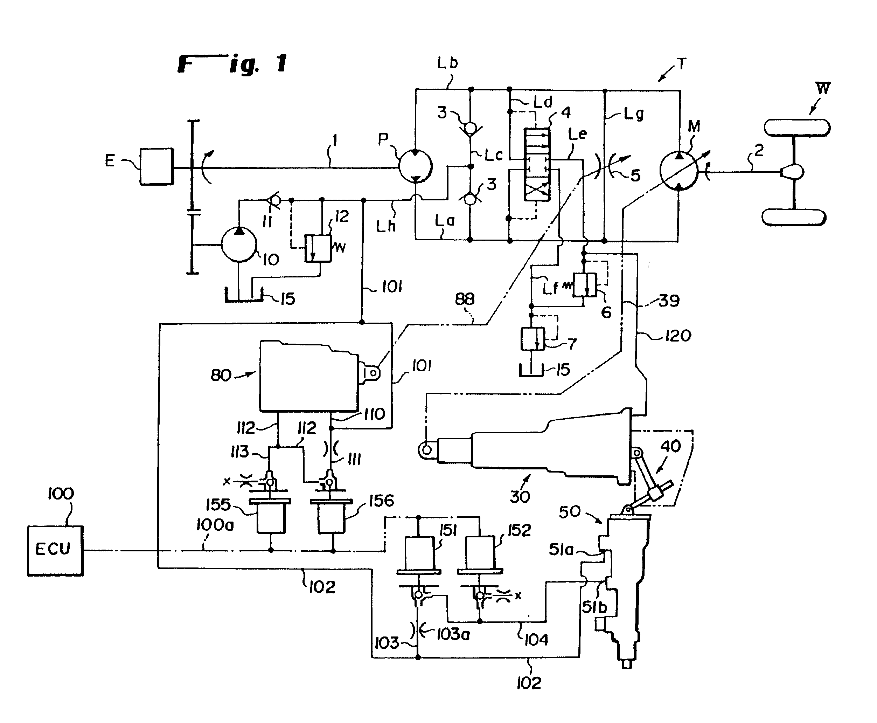

Fig.1 shows a hydraulic circuit diagram of a continuously variable speed transmission provided with a controller, the first embodiment according to the invention. The continuously variable speed transmission T has a constant displacement hydraulic pump P driven by the engine E through an input shaft 1 and a variable displacement hydraulic motor M connected to an output shaft 2 driving wheels W. These hydraulic pump P and Motor M constitute a closed hydraulic circuit along with two hydraulic lines : the first hydraulic line La by which the delivery port of the pump P communicates with the suction port of the motor M, and the second hydraulic line Lb by which the suction port of the pump P communicates with the delivery port of motor M.

A charge pump 10 driven by the engine E is connected to the closed circuit through a charge hydraulic line Lh having a check valve 11 and through a third hydraulic line Lc having a pair of check valves 3. Hydraulic oil pumped up by the charge pump 10 from an oil sump 15 and regulated as to its pressure by a charge pressure relief valve 12 is supplied to the one of the two hydraulic lines La or Lb which has lower pressure through the check valves 3. And, a fourth hydraulic line Ld having a shuttle valve 4 is connected to the closed circuit. To the shuttle valve 4 are connected a fifth Le and a sixth Lf hydraulic line which respectively have a high pressure relief valve 6 and a low pressure relief valve 7 and are connected to the oil sump 15. The shuttle valve 4 is a 2-port 3-position selector valve, which is operated in response to a hydraulic pressure difference of the first and second hydraulic lines to connect the one of the first or second hydraulic lines La, Lb having higher pressure with the fifth hydraulic line Le as well as to connect the other having lower pressure to the sixth hydraulic line Lf. Therefore, the relief hydraulic pressure of the higher pressure-side line is regulated by the high pressure relief valve 6, and the relief hydraulic pressure of the other lower pressure-side line is regulated by the low pressure relief valve 7.

Between the first and the second hydraulic lines La and Lb is provided a seventh hydraulic line Lg through which both lines can be communicated with each other. The seventh hydraulic line Lg is provided with a flow metering clutch valve 5 to control the opening degree of the line Lg. The clutch valve 5 is actuated by a clutch servo unit 80 which is connected thereto through a link 88. Therefore, the flow metering control of the clutch valve 5 by the actuation of the clutch servo valve 80 can accomplish a clutch control for controlling transmission of driving power from the hydraulic pump P to the hydraulic motor M.

First and second ratio control servo units 30 and 50 connected to one another by a link mechanism 40 act as actuators for controlling the speed reduction ratio of the continuously variable speed transmission T by way of the displacement control of the hydraulic motor M. The hydraulic motor M is a swash plate type axial piston motor whose displacement is varied by the control of swash plate angle by the ratio control servo units 30 and 50.

The actuations of the ratio control servo units 30 and 50 as well as the clutch servo unit 80 are respectively controlled by pairs of solenoid valves 151, 152 and 155, 156 which are duty-ratio-controlled by signals from a controller 100. The controller 100 receives signals corresponding to such parameters as vehicle speed V, engine speed N, throttle opening θth, swash plate angle θtr of the hydraulic motor M, accelerator pedal opening θacc operated by a driver, atmospheric pressure Pat, oil temperature To, water tenperature Tw and clutch opening θcl. The controller 100, based on the above signals, outputs signals for controlling the above solenoid valves to effectuate desirable travelling control. Here, the engine throttle valve opening θth and the accelerator pedal opening θacc to actuate the engine throttle valve are parameters representing the driver's intention to accelerate or decelerate. The accelerator pedal opening θacc is "fully-open" when the accelerator pedal is fully depressed, and "fully-closed" when fully released.

The structures and operations of the above servo units 30, 50 and 80 are described in detail hereinafter.

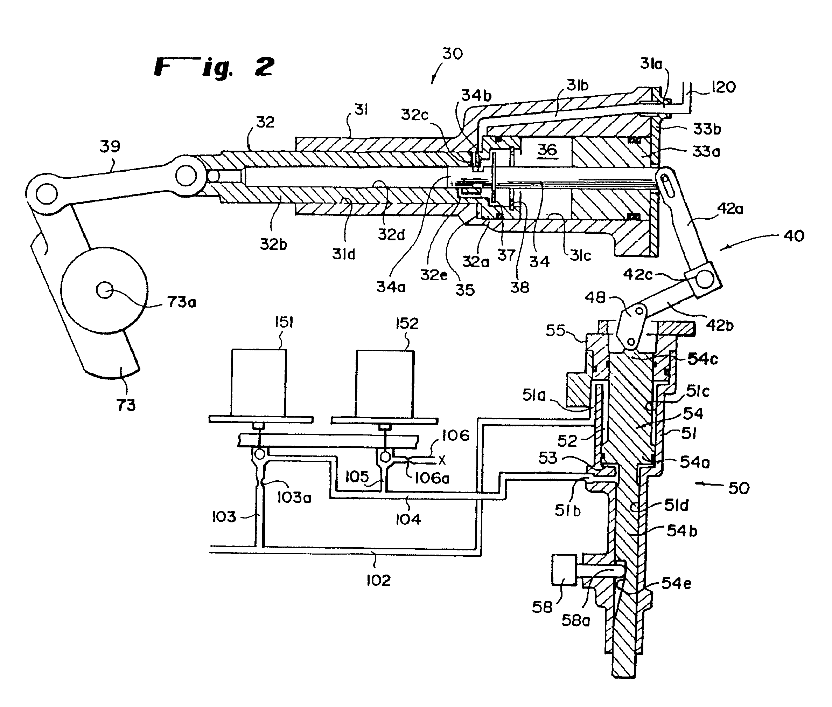

Referring first to the ratio control servo units 30, 50 shown in FIGS. 1 and 2, the first ratio control servo unit 30 controls the swash plate angle of the hydraulic motor M with the help of the high hydraulic pressure fed from the closed hydraulic circuit of the transmission T through the shuttle valve 4, the fifth line Le and a high pressure line 120. The second ratio control servo unit 50 is connected to the first ratio control servo unit 30 by a link mechanism 40 and controls the operation of the first ratio control servo unit 30.

The first ratio control servo unit 30 comprises a housing 31 having a connection port 31a connected to the high pressure line 120, a piston member 32 slidably inserted into the housing 31, and a spool member 34 slidably and coaxially inserted into the piston member 32. The piston member 32 comprises a piston portion 32a formed at its right end and a rod portion 32b coaxially extending leftward. The piston portion 32a is fitted into a cylinder hole 31c of the housing 31 and divides the space inside the cylinder hole 31c into two chambers defining two cylinder chambers 35, 36. The rod portion 32b having a smaller diameter than that of the cylinder hole 31c is inserted into a rod hole 31d which is concentric with the cylinder hole 31c. The right cylinder chamber 36 is covered by a plug member 33a and cover 33b through which the right end of the spool member 34 protrudes.

The high pressure line 120 connected to the port 31a is communicated with the left cylinder chamber 35 through a hydraulic line 31b. The piston member 32 is pushed rightward by the hydraulic pressure fed in the left cylinder chamber 35 through the high pressure line 120.

A land portion 34a which is inserted in a spool hole 32d in piston 32 is formed at the left end of the spool member 34. A pair of dents 34b with fixed axial widths is formed at the right side of the land portion 34a. A stop ring 37 mounted on the spool member 34 hits against a stop ring 38 mounted on the inside surface of the piston member 32 before the spool member 34 comes out.

A drain passage 32e which can connect the right cylinder chamber 36 to the oil sump (not shown) through the spool hole 32d in response to the rightward motion of the spool member 34, and a connection passage 32c which can connect the left cylinder chamber 35 to the right cylinder chamber 36 through the dents 34b in response to the leftward motion of the spool member 34 are formed in the piston member 32.

When the spool member 34 is moved rightward, the land portion 34a blocks the connection passage 32c and opens the drain passage 32e. Accordingly the hydraulic pressure fed through the high pressure line 120 is let into left cylinder chamber 35 and pushes the piston member 32 rightward so that the piston member 32

4

EP 0 310 447 B1

follows the spool member 34. When the spool member 34 is moved leftward, the connection passage 32c communicates with the right cylinder chamber 36 through the dents 34b and the drain passage 32e is blocked by the land portion 34a. Accordingly the high hydraulic pressure is fed to both the left and right cylinder chambers 35, 36. The piston member 32 is pushed leftward because of the difference in areas where pressure is applied and therefore the piston member 32 is moved so as to follow the spool member 34.

When the spool member 34 is held still, the piston member 32 is also held still because of pressure balance between the left and right cylinder chambers 35, 36.

As aforesaid, when the spool member 34 is moved leftward or rightward, the piston member 32 is moved laterally so as to follow the spool member 34 by the help of the high hydraulic pressure fed through the high pressure line 120. Accordingly the variable displacement of the motor M is controlled by the motion of the spool member 34 since the piston member 32 is connected to the swash plate 73 of the motor M by means of a link member 39.

The spool member 34 is linked to the second servo unit 50 by means of a link mechanism 40. The link mechanism 40 includes a first link member being swingable around an axis 42c and having two arms 42a and 42b perpendicular to each other, and a second link member 48 pivotally connected to the arm 42b. The upper end of the arm 42a is pivotally connected to the right end of the spool member 34. The bottom end of the second link member 48 is pivotally connected to a spool member 54 of the second servo unit 50. Therefore when the spool member 54 of the second servo unit 50 is moved up or down, the spool member 34 of the first servo unit 30 is moved rightward or leftward.

The second servo unit 50 comprises a housing 51 having ports 51a, 51b to which hydraulic lines 102, 104 are connected respectively, and the spool member 54 vertically slidably fitted in the housing 51. The spool member 54 consists of a piston portion 54a, an end spool portion 54b coaxially extending downward and a rod portion 54c coaxially extending upward therefrom. The piston portion 54a is inserted into a cylinder hole 51c of the housing 51 and divides the space inside the cylinder hole 51c covered by a cover 55 into two chambers defining a rod-side (upper) and a head-side (lower) cylinder chamber 52, 53. The end spool portion 54b is fitted into a rod hole 51d which is concentric with the cylinder hole 51c and extends downward.

A spool 58a of a top position detecting switch 58 projects into a recess 54e formed on the end spool portion 54b. The spool 58a is pushed up along the tapered surface of the recess 54e when the spool member 54 is moved up. Therefore it can be found by the top position detecting switch 58a if the speed reduction ratio has become minimum since the pushed-up spool 58a turns the switch 58 on.

Further, the hydraulic lines 102, 104 are communicated with the rod-side and head-side cylinder chambers 52, 53 through the ports 51a, 51b. The spool member 54 is moved up or down by the difference of hydraulic forces applied to the piston portion 54a which are determined based on the differences of hydraulic pressures and of the areas where the hydraulic pressures in the cylinder chambers 52, 53 are applied. The up and down motions of the spool member 54 are transmitted to the spool member 34 of the first servo unit 30 by the link mechanism 40 causing right and left motions of the spool member 34. In other words, the control of the hydraulic pressures supplied through the hydraulic lines 102, 104 enables the control of the motion of the spool member 34 and the piston member 32 in the first servo unit 30 and also enables the control of the swash plate angle of the hydraulic motor M and the displacement of the latter. In fact, when the spool member 54 of the second servo unit 50 is moved up, the piston member 32 of the first servo unit 30 is moved rightward lessening the swash plate angle, the displacement of the hydraulic motor M and the speed reduction ratio.

The pressurized oil in the hydraulic line 102 connected via the port 51a to the rod-side cylinder chamber 52 is sent through hydraulic lines 101 and 102 from the delivery line of the charge pump 10 after its pressure is regulated by the charge pressure relief valve 12. The oil pressure in the hydraulic line 104 connected via the port 51b to the head-side cylinder chamber 53 is obtained by regulating the oil pressure in a hydraulic line 103 (including an orifice 103a therein), which branches from the hydraulic line 102, by the first and second duty-ratio-controlled solenoid valves 151 and 152. The first solenoid valve 151 duty-ratio-controls the flow rate of the oil flowing from the hydraulic line 103 (having the orifice 103a therein) to the hydraulic line 104. The second solenoid valve 152 is disposed between a hydraulic line 105 branched from the line 104 and a hydraulic line 106 communicating with the drain through an orifice 106a, and duty-ratio-controls drain-flow of the hydraulic oil from the line 104 in accordance with a given duty ratio.

As a result, to the rod-side cylinder chamber 52 a charge pressure regulated by the charge pressure relief valve 12 is applied through the line 102, while to the head-side cylinder chamber 53 is supplied from the line 104 a lower pressure than the charge pressure which is regulated by the first and second solenoid valves 151 and 152. In this connection, since the area to which pressure is applied in the rod-side cylinder chamber 52 is smaller than that in the head-side cylinder chamber 53, the forces of oil pressures in the cylinder chambers 52 and 53 acting on the spool member 54 keep their balance when the oil pressure in the head-side cylinder chamber 53 is a specified value $P1$ which is smaller than the oil pressure $Pu$ in the rod-side cylinder chamber 52

5

(Pu > P1). Therefore, when the oil pressure supplied into the head-side cylinder chamber 53 from the line 104 is controlled by the first and second solenoid valves 151 and 152 so as to be higher than the above pressure P1, the spool member 54 is moved upward to have a small swash plate angle of the hydraulic motor M, i.e., to have a small speed reduction ratio, while the oil pressure supplied into the head-side cylinder chamber 53 from the line 104 is controlled so as to be smaller than the above pressure P1, the spool member 54 is moved downward to have a big swash plate angle of the hydraulic motor M, i.e., to have a big speed reduction ratio.

Both solenoid valves 151 and 152 are controlled by signals from the controller 100 : by controlling the operations of the two solenoid valves 151 and 152 based on the signals from the controller 100, the actuations of the first and second ratio control servo units 30 and 50 are controlled, which results in the control of the displacement of the hydraulic motor M, in other words the control of speed reduction ratio.

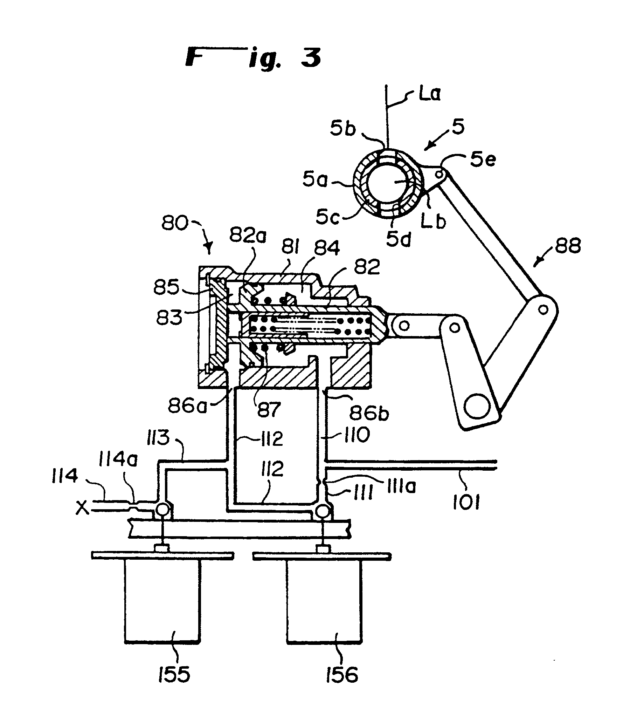

The following is a detailed description of the construction of the clutch servo unit 80 based on FIG. 3. The clutch servo unit 80 consists of a cylinder member 81, a piston member 82 inserted in the cylinder member 81 slidably to the right and left in Fig.2, a cover member 85 is fixed to cover the cylinder chamber into which the piston member 82 is inserted, and a spring 87 pushing the piston member 82 to the left in Fig.2. A piston 82a on the piston member 82 divides the aforesaid cylinder chamber 81 into a head-side (left) cylinder chamber 83 and a rod-side (right) cylinder chamber 84 to both of which hydraulic lines 112 and 110 are respectively connected via respective ports 86a and 86b.

The hydraulic oil in the hydraulic line 110 is transferred from the charge pump 10 (whose delivery pressure is regulated by the charge pressure relief valve 12) through a hydraulic line 101, while the hydraulic oil in the hydraulic line 112 is transferred from the hydraulic line 101 through a hydraulic line 111 branching therefrom and passes through an orifice 111a in the line 111. Hydraulic oil pressure is controlled by the two duty-ratio-controlled solenoid valves 155 and 156. Here, the solenoid valve 156 is provided to control the flow rate of the hydraulic oil flowing from the line 111 (having the orifice 111a therein) to the line 112 based on the duty ratio signals, while the solenoid valve 155 is disposed between a hydraulic line 113 branching from the line 112 and a hydraulic line 114 communicating with the drain through an orifice 114a, to control the flow of the hydraulic oil from the line 113 to the drain based on the duty signals.

Therefore, to the rod-side cylinder chamber 84 via the line 110 is applied the charge pressure regulated by the charge pressure relief valve 12, while to the head-side cylinder chamber 83 is applied a pressure from the line 112 lower than the charge pressure, by the action of the aforesaid two solenoid valves 155 and 156. In this connection, the force applied on the piston member 82 from the right side (that is, a force due to the hydraulic pressure P1 in the rod-side cylinder chamber 84 plus the force of the spring 87) balances with the force applied on the piston member 82 from the left side (that is, a force due to a hydraulic pressure P2 in the head-side cylinder chamber 83), even though P2 is lower than P1, because the area of the rod-side cylinder chamber 84 subject to oil pressure is designed to be much smaller than that of the head-side cylinder chamber 83. Therefore, if the solenoid valves 155 and 156 control the hydraulic pressure (in the head-side cylinder chamber 83) supplied from the line 112 so as to be larger than the pressure P2, the piston member 82 will be moved to the right, while when the solenoid valves 155 and 156 control the hydraulic pressure in the head-side cylinder chamber 83 supplied from the line 112 so as to be smaller than the pressure P2, the piston member 82 will be moved to the left.

The movement of the piston member 82 to the left or right is transmitted to the clutch valve 5 through a link 88. The clutch valve 5 consists of a stationary member 5a having a first valve port 5b therein, and a rotary member 5c having a second valve port 5d rotatably inserted in the stationary member 5a. An arm 5e engaging with the rotary member 5c is connected to the aforesaid link 88, thus allowing a rotation of the rotary member 5c in accordance with the movement of the aforesaid piston member 82. When the rotary member 5c is rotated, the communication between the first and second valve ports 5b and 5d varies from "fully open" to "fully closed". When the piston member 82 is moved to the leftmost as shown in Fig.2, the communication in the clutch valve 5 is "fully open", while as the piston member 82 moves to the right, the communication varies gradually to "fully closed".

Because the first valve port 5b communicates with the first line La and the second valve port 5d communicates with the second line Lb constituting the hydraulic closed-circuit, the variation in the communication between the aforesaid first and second valve ports 5b and 5d can change the opening degree of the seventh line Lg or the short circuit line of the first and second lines La and Lb, thus effecting clutch control. In other words, based on signals from the controller 100, duty-ratio control of the aforesaid solenoid valves 155 and 156 can perform a successful clutch control.

With a continuously variable speed transmission having the above configuration, methods of ratio control and clutch control by way of the operational control of the solenoid valves are described.

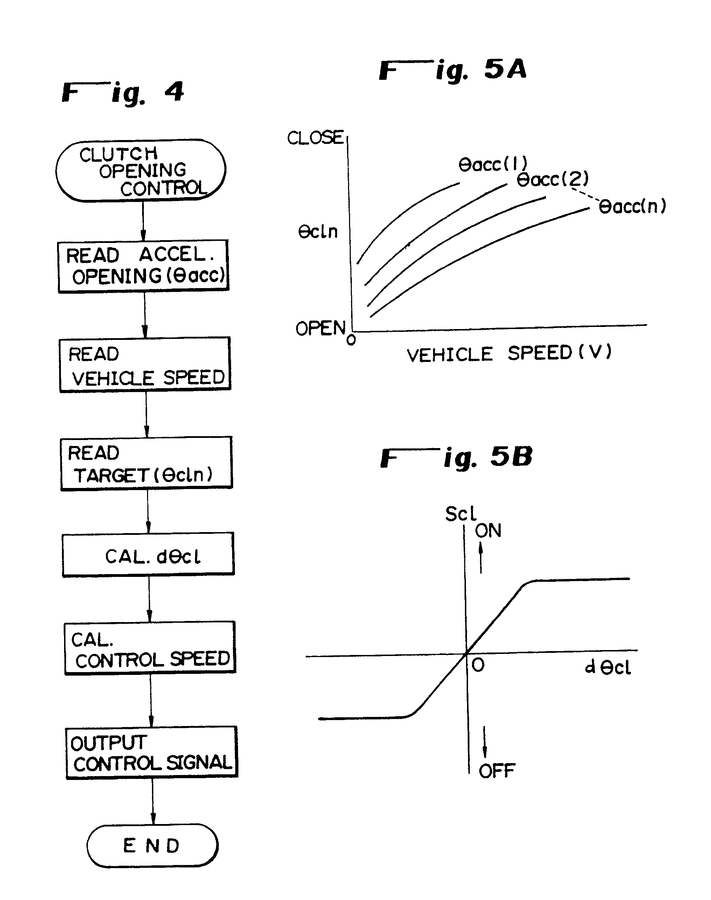

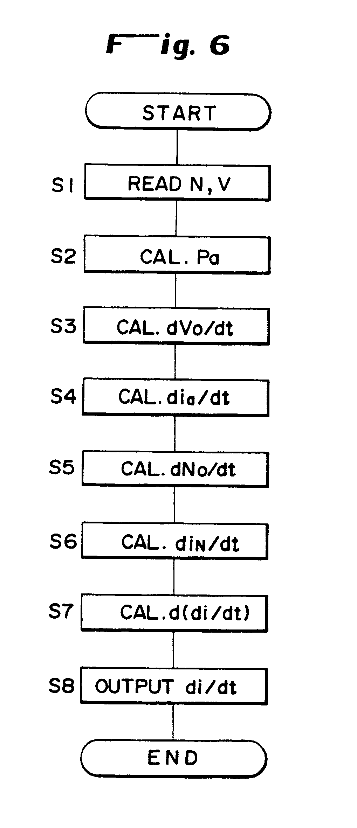

First, the clutch control is performed as shown in the flow chart in FIG. 4. This control starts with inputting accelerator pedal opening θacc (or engine throttle opening θth) and vehicle speed V. Then a reference clutch

opening θcln is calculated based on the vehicle speed V and the accelerator pedal opening θacc. This calculation is made based on the graph shown in FIG. 5A representing reference clutch opening θcln which is preset corresponding to vehicle speed V for each accelerator pedal opening θacc (1), θacc(2), .... θacc(n) (where, θacc(1) corresponds to the throttle "fully-closed" and θacc(n) corresponds to throttle "fully-open"). The reference clutch opening θcln varies in a range between 0 degree and 90 degrees.

Then, the difference dθcl (= θclo – θcl)between the reference clutch opening θclo and the actual clutch opening θcl is calculated, to obtain a clutch opening control speed Scl using the graph in FIG. 5B. The control speed Scl is, as apparent in FIG. 5B, given in the "clutch-engagement" direction (ON direction) to close the clutch valve when the difference dθcl is positive, while it is given in the "clutch-disengagement" direction (OFF direction) to open the clutch valve when the difference dθcl is negative. The speed Scl increases in proportion to the difference dθcl, but when the difference exceeds a given value, the control speed Scl tends essentially to a constant.

After the control speed Scl is obtained as described above, the controller 100 outputs command signals to the solenoid valves 155 and 156 so that the clutch valve 5 is actuated in accordance with the control speed Scl.

Next, ratio control associated with the first embodiment is described. First, the speed reduction ratio i (= input speed/output speed) is represented by equation (1) :

$$i = N / ( C' * \cdot V ) \qquad \dots \dots \quad (1)$$

where, N = engine speed, V = vehicle speed and C' is a constant. Differentiation of the equation (1) by time t gives the equation (2) for change rate of speed reduction ratio di/dt :

$$di/dt = 1/(C'*V)*(dN/dt - N/(C'*V)*C'*dV/dt) \quad \dots \quad (2)$$

In the equation (2), substitution of a reference change rate $dN_o/dt$ of engine speed for the change rate dN/dt of engine speed, a predicted acceleration $dV_o/dt$ for the acceleration dV/dt and 1/C for C' gives the equation (3) :

$$di/dt = -C*(N/V^2)*dV_o/dt + C*(1/V)*dN_o/dt \qquad \dots \dots \quad (3)$$

As shown in the equation (3), the change rate di/dt of speed reduction ratio can be interpreted as the sum of a component dia/dt (= –C * N/V² * $dV_o$/dt) corresponding to the predicted acceleration $dV_o$/dt and a component $di_N$/dt (= C * 1/V * $dN_o$/dt) corresponding to the reference change rate $dN_o$/dt of engine speed. The predicted acceleration $dV_o$/dt is obtained from the following equations (4) to (7) :

Output power Pe of the engine E (when transmission efficiency is assumed 100%) is given by the following equation (4) ;

$$Pe = Ru + Ra + Pa \qquad \dots \dots \dots \quad (4)$$

where, Ru = running resistance, Ra = air resistance, Pa = reserved power of engine E.

From the equation (4), Pa is given by the following equation (5) ;

$$Pa = Pe - (Ru + Ra) \qquad \dots \dots \dots \quad (5)$$

And, the reserved power can be given by the following equation (6) too ;

$$Pa = (W+dW)*(1/g)*(dV_o/dt)*(V*10^3)/60^2*(1/75) \quad .. \quad (6)$$

where, W is total vehicle weight and dW is total engine rotational mass.

From the equation (6) the following equation (7) is given ;

$$dV_o/dt = Pa*g*60^2/((w+dW)*(V*10^3))*75 \quad ..... \quad (7)$$

Therefore, the predicted acceleration $dV_o/dt$ can be calculated from reserved power Pa of engine E, and the reserved power Pa can be obtained from the equation (5). On the other hand, the reference change rate $dN_o/dt$ of engine speed is determined by the following steps : calculating the difference dN between the reference engine speed No which is determined based on a parameter representing a driver's intention to accelerate or decelerate and the actual engine speed N ; and reading the reference change rate $dN_o/dt$ from a table in which the reference change rate $dN_o/dt$ is defined corresponding to the aforesaid difference dN so as to obtain favorable running feeling and fuel consumption.

However, with regard to the change rate di/dt of speed reduction ration thus obtained from the equation (3), the component (dia/dt) corresponding to the predicted acceleration $dV_o/dt$ is determined based on only the reserved power of engine E. The influences of running resistance in the ascending or descending slope are not taken into account. For this reason, when the speed reduction ratio is controlled based on the change rate di/dt of speed reduction ratio calculated by the equation (3), in ascending a slope the engine speed tends to fall under the reference speed because of increased running resistance, while in descending a slope it tends to rise over the reference speed because of decreased running resistance.

Such being the case, in this ratio control, the aforesaid deviation from the reference speed is corrected using the difference between the predicted acceleration $dV_o/dt$ and the actual acceleration dV/dt : thus the change rate di/dt of speed reduction ratio is given by the following equation (8).

$$di/dt = -C_1*N/V^2*dV_o/dt+C_2*1/V*dN_o/dt$$
$$+C_3*N/V^2*(dV_o/dt-dV/dt) \quad ... \quad (8)$$

where, $C_1$, $C_2$ and $C_3$ are constants for weighting.

More particularly, the change rate di/dt of speed reduction ratio in the ratio control is calculated as the sum of the component dia/dt (= $-C_1$ * ($N/V^2$) * $dV_o/dt$) corresponding to the predicted acceleration $dV_o/dt$, the component $di_N/dt$ (= $C_2$ * (1/V) * $dN_o/dt$) corresponding to the reference change rate $dN_o/dt$ of engine speed, and the component d(di/dt) (= $C_3$ * ($N/V^2$) * ($dV_o/dt$ = dv/dt) for correction of the predicted acceleration component corresponding to the variations of running resistance. At this time, the weights of the respective components can be adjusted for obtaining proper ratio control characteristics in accordance with actual vehicle running.

Such calculation of the change rate di/dt of speed reduction ratio as described above and the control of speed reduction ratio based on the computed change rate di/dt is made by the controller 100. Here, the sequence of the control is illustrated using the flow chart in FIG. 6 :

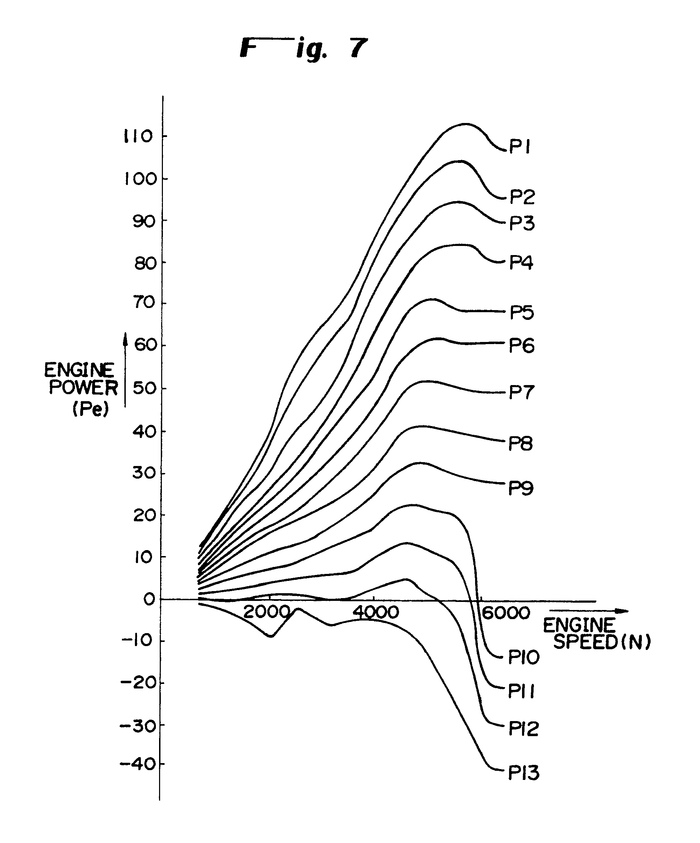

First, in the first step S1, the engine speed N and the vehicle speed V are inputted into the controller 100. In the second step S2 is calculated the reserved engine power Pa. The calculation is performed based on the equation (5), while the engine output power Pe, can be obtained from the map shown typically in FIG. 7 ; the abscissa represents the engine speed N, and the ordinate represents engine output power Pe, based on a plurality of vacuums $P_1$ to $P_{13}$ of intake air. In other words, the engine power Pe is obtained from the engine speed N and the vacuum pressure of intake air.

Here, the engine output power Ce thus obtained is determined without considering transmission efficiency. To calculate actual power transmitted to the wheels, it must be corrected by the product $E_{fM}$ of the speed reduction ratio coefficient (function of the speed reduction ratio i) and the transmission efficiency (function of the engine output power Pe and the engine speed N). For this reason, the reserved power Pa used in the second step S2 employs the corrected power obtained in FIG. 7 by said efficiency $E_{fM}$.

As described above, the reserved power Pa of the engine E actually applied to the wheels is calculated, which gives the predicted acceleration $dV_o/dt$ using the equation (7) in the third step S3. Then, in the fourth step S4, the predicted acceleration component $dia/dt$ of the speed reduction ratio change rate is computed.

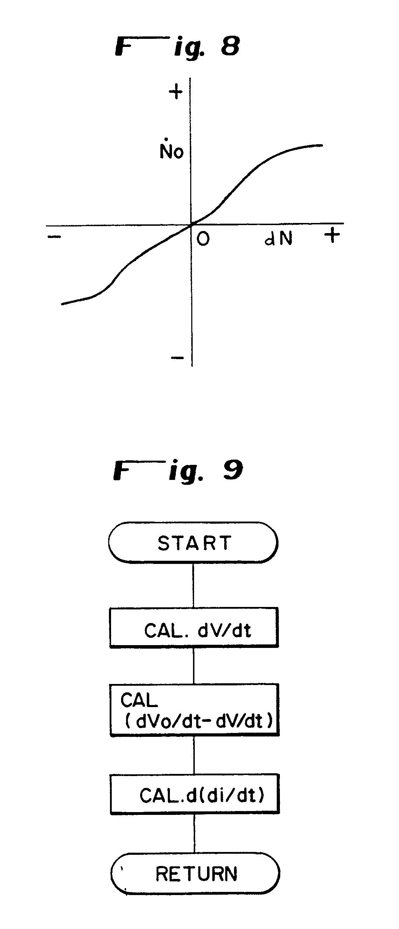

In the fifth step S5, the reference change $dN_o/dt$ of the engine speed is obtained : as shown in FIG. 8, the reference change rate $dN_o/dt$ is determined based on the speed difference $dN$ between the reference engine speed No and the actual engine speed N. In the sixth step S6, based on the reference change rate $dN_o/dt$, the component $di_N/dt$ of the change rate $di/dt$ of speed reduction ratio is obtained.

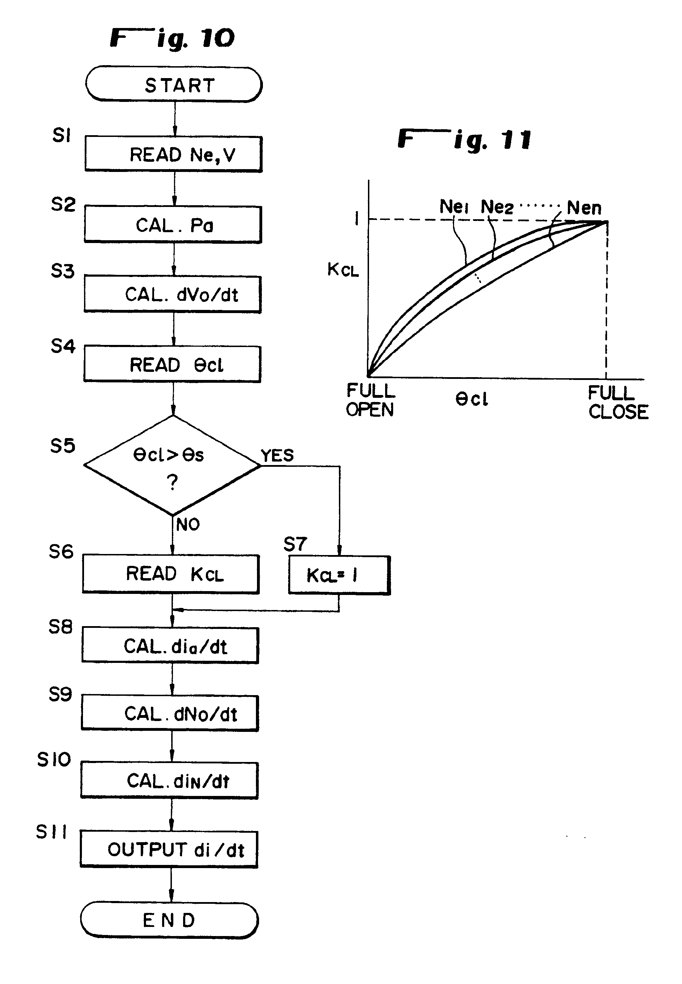

Next, in the seventh step S7, the correction component $d(di/dt)$ of the predicted acceleration is obtained : the subroutine in FIG. 9 shows the calculation. In the subroutine, the actual acceleration $dV/dt$ is calculated by differentiating the vehicle speed V, and the difference $(dV_o/dt - dV/dt)$ between the predicted acceleration and the actual acceleration is calculated. Then using the engine speed N, the vehicle speed V, and the weighting constant $C_3$ already established, the correction component $d(di/dt)$ is calculated from the above equation $C_3 * (N/V^2) * (dV_o/dt - dV/dt)$.

As described above, when all components $di_a/dt$, $di_N/dt$ and $d(di/dt)$ are calculated, in the eighth step S8, as shown in equation (8), these components are added to compute the change rate $di/dt$ of speed reduction ratio. Using this calculated value $di/dt$ as a control value, the controller 100 actuates and controls the solenoid valves 151 and 152.

The predicted acceleration $dV_o/dt$ obtained from the equation (7) based on the reserved output Pa is determined based on level road running. However, even when there are variations in running resistance due to ascending / descending, or exposure to tail wind / head wind, since the change rate $di/dt$ of speed reduction ration is corrected by the correction component $d(di/dt)$, this ratio control has hardly any possibility that the actual engine speed deviates from the reference engine speed.

Next, a ratio control as a second embodiment is described.

Regarding the change rate $di/dt$ of speed reduction ratio thus obtained from the equation (3), the component corresponding to the predicted acceleration $dV_o/dt$ is calculated from the reserved power of the engine, but the reserved power of the engine is the one obtained when all of the engine output is directly transmitted to the transmission. Therefore, for example, when the engine power is partly transmitted through the clutch, the equation (3) cannot be used directly as it is.

Accordingly, in this control to calculate the component for the predicted acceleration using the engine power actually delivered to the transmission, the equation (3) is corrected by a transmission rate of the clutch $K_{CL}$ into the following equation (9) to obtain the change rate $di/dt$ of speed reduction ratio :

$$di/dt = -C_4 * N/V^2 * dV_o/dt * K_{CL} + C_5 * 1/V * dN_o/dt \quad .... \quad (9)$$

where, $C_4$ and $C_5$ are constants for weighting the two components.

The calculation of change rate $di/dt$ of speed reduction ratio described above and the control of speed reduction ratio based on the thus computed change rate $di/dt$ of speed reduction ratio are performed by the controller 100. The control is detailed referring to the flow chart in FIG. 10 :

First, in the first step S1, the engine speed Ne and the vehicle speed V is inputted to the controller 100, and in the second step S2 the reserved engine power Pa is calculated. The calculation of the reserved power Pa is performed using the equation (5). As in the first embodiment, the power Pe of the engine E itself is obtained from the predefined map for instance typically shown in FIG. 7. Further, the reserved power Pa calculated in the second step S2 is corrected by the aforesaid efficiency $E_{fM}$.

The reserved power Pa of the engine E is obtained as described above, and in the third step S3 predicted acceleration $dV_o/dt$ is obtained from the equation (7).

Next, in the fourth step S4, clutch opening $\theta cl$ is inputted, and in the fifth step it is judged whether the clutch opening $\theta cl$ is larger than an opening $\theta s$ predetermined as a value close to the "fully-closed" condition. In other words, whether the clutch opening $\theta cl$ is essentially fully closed is judged, and if $\theta cl > \theta s$, i.e., the clutch valve 5 is substantially fully closed, the transmission rate of the clutch $K_{CL}$ is set to 1. On the contrary, if $\theta cl < \theta s$, the step is advanced to the sixth step S6 to read the transmission rate $K_{CL}$ using FIG. 11. The transmission rate $K_{CL}$ has been predefined for the clutch opening $\theta cl$ corresponding to each engine speed ($Ne_1$, $Ne_2$ .. $Ne_n$) as shown in the graph in FIG. 11. Therefore, using this graph, the transmission rate is obtained based on the engine speed Ne and the clutch opening $\theta cl$.

Next in the eighth step S8, using the transmission rate $K_{CL}$, the predicted acceleration component $dia/dt$ for the change rate $di/dt$ of speed reduction ratio is calculated from the following equation :

$$dia/dt = -C_4 * (N/V^2) * (dV_o/dt) * K_{CL}$$

9

In the 9th step S9, the reference change rate $dN_o/dt$ of engine speed is obtained. As shown in FIG. 8, the reference change rate $dN_o/dt$ is predetermined for the difference $dN$ between the reference engine speed No and the actual engine speed N, and the reference change rate $dN_o/dt$ is calculated based on the difference $dN$. In the tenth step S10, based on the reference change rate $dN_o/dt$, the component $di_N/dt$ for the change rate $di/dt$ of speed reduction ratio corresponding to the reference change rate $dN_o/dt$ of engine speed is calculated from the following equation :

$$di_N/dt = C_5 * (1 / V) * (dN_o/dt)$$

After both components $dia/dt$ and $di_N/dt$ are calculated as described above, in the eleventh step S11, the both components are added to calculate the change rate $di/dt$ of speed reduction ratio as shown in the equation (9), and the controller 100 actuates and controls the solenoid valves 151 and 152 using the calculated value $di/dt$ as control value.

In the control used in the second embodiment, the change rate $di/dt$ of speed reduction ratio is calculated as the sum of the component $dia/dt$ $(= C_4 * N/V^2 * dV_o/dt * K_{CL})$ corresponding to predicted acceleration $dV_o/dt$, which is obtained based on the actual input power to the transmission and corrected by the transmission rate $K_{CL}$, and the component $di_N/dt$ $(= C_5 * 1/V * dN_o/dt)$ corresponding to the reference change rate $dN_o/dt$ of engine speed, and the ratio control is performed using the change rate $di/dt$ of speed reduction ratio calculated as described above. Therefore, both during clutch engaging and after clutch engagement completion, the ratio control can be performed based only on the aforesaid change rate $di/dt$ of speed reduction ratio. As a result, the clutch engagement control condition is smoothly shifted to the clutch engagement completion condition, thus eliminating causes of unfavorable feelings during speed change, and rapid increases of engine speed.

Here the embodiments are adapted for a continuously variable speed transmission having a hydraulic pump and a hydraulic motor, but the application of the control methods according to the invention are not limited to such a continuously variable speed transmission, but may include other types of continuously variable speed transmission. Further, as a control device of speed reduction ratio, not only such electrical-hydraulic type device as in the embodiments for controlling solenoid valves by an electrical controller but also a hydraulic device for producing oil pressure corresponding to throttle opening and actuating servo units by the oil pressure may be used.

## Claims

1. A method of controlling the speed reduction ratio of a continuously variable speed transmission, comprising the steps of :

determining a predicted acceleration $dV_o/dt$ calculated from reserved power of an engine, a reference change rate $dN_o/dt$ of engine speed obtained based on a parameter representing a driver's intention to accelerate or decelerate, an actual vehicle speed V, an actual acceleration $dV/dt$, and an actual engine speed N, calculating a change rate $di/dt$ of speed reduction ratio by the following equation using the above values

$$di/dt = -C_1 * N/V^2 * (dV_o/dt) + C_2 * 1/V * (dN_o/dt) + C_3 * N/V^2 * (dV_o/dt - dV/dt)$$

where, $C_1$, $C_2$ and $C_3$ are constants ; and
controlling the speed reduction ratio using said calculated change rate $di/dt$ of speed reduction ratio as a control value.

2. A method of controlling a speed reduction ratio as defined in claim 1, wherein said continuously variable speed transmission comprises a hydraulic pump driven by said engine and a hydraulic motor driven by hydraulic pressure from said hydraulic pump ; and
displacement of at least one of said hydraulic pump and hydraulic motor is variably controlled based on said change rate $di/dt$ of speed reduction ratio.

3. A method of controlling the speed reduction ratio of a continuously variable speed transmission comprising the steps of :

determining a predicted acceleration $dV_o/dt$ calculated from reserved power of an engine, a reference change rate $dN_o/dt$ of engine speed obtained based on a parameter representing a driver's intention to accelerate or decelerate, an actual vehicle speed V, an actual engine speed N and a transmission rate $K_{CL}$ of engine power through a clutch, calculating a change rate $di/dt$ of speed reduction ratio by the following equation using above values

$$di/dt = -C_4*(N/V^2)*dV_o/dt*K_{CL}+C_5*(1/V)*dN_o/dt$$

where, $C_4$ and $C_5$ are constants ; and
controlling the speed reduction ratio using said calculated change rate di/dt of speed reduction ratio as a control value.

4. A method of controlling speed reduction as defined in claim 3, wherein said continuously variable speed transmission comprises a hydraulic pump driven by said engine and a hydraulic motor driven by hydraulic pressure from said hydraulic pump ; and
displacement of at least one of said hydraulic pump and hydraulic motor is variably controlled based on said change rate di/dt of speed reduction ratio.

## Patentansprüche

1. Verfahren zur Steuerung eines Drehzahlminderungsverhältnisses eines stufenlos einstellbaren Getriebes, umfassend die Schritte :
Bestimmen einer aus einer Leistungsreserve eines Motors errechneten vorhergesagten Beschleunigung $dV_o/dt$, einer Motordrehzahl-Bezugsänderungsrate $dN_o/dt$, die auf Basis eines eine Beschleunigungs- oder Verzögerungsabsicht des Fahrers repräsentierenden Parameters erhalten wird, einer tatsächlichen Fahrzeuggeschwindigkeit V, einer tatsächlichen Beschleunigung dV/dt und einer tatsächlichen Motordrehzahl N ;
Berechnen einer Änderungsrate di/dt des Drehzahlminderungsverhältnisses durch die folgende Gleichung unter Verwendung der oben genannten Werte :

$$di/dt = -C_1*N/V^2*(dV_o/dt)+C_2*1/V*(dN_o/dt)+C_3*N/V^2*(dV_o/dt-dV/dt)$$

wobei $C_1$, $C_2$ und $C_3$ Konstanten sind ; und
Steuern des Drehzahlminderungsverhältisses unter Verwendung der errechneten Änderungsrate di/dt des Drehzahlminderungsverhältnisses als einem Steuerwert.

2. Verfahren zur Steuerung eines Drehzahlminderungsverhältnisses nach Anspruch 1, wobei das stufenlos einstellbare Getriebe eine durch den Motor angetriebene Hydraulikpumpe und einen durch Hydraulikdruck von der Hydraulikpumpe angetriebenen Hydraulikmotor aufweist und wobei
eine Verdrängung der Hydraulikpumpe und/oder des Hydraulikmotors auf Basis der Änderungsrate di/dt des Drehzahlminderungsverhältnisses einstellbar gesteuert ist.

3. Verfahren zur Steuerung des Drehzahlminderungsverhältnisses eines stufenlos einstellbaren Getriebes, umfassend die Schritte :
Bestimmen einer aus einer Leistungsreserve eines Motors errechneten vorhergesagten Beschleunigung $dV_o/dt$, einer Motordrehzahl-Bezugsänderungsrate $dN_o/dt$, die auf Basis eines eine Beschleunigungs- oder Verzögerungsabsicht des Fahrers repräsentierenden Parameters erhalten wird, einer tatsächlichen Fahrzeuggeschwindigkeit V, einer tatsächlichen Motordrehzahl N und einer Übertragungsrate $R_{CL}$ der Motorkraft durch eine Kupplung ; Berechnen einer Änderungsrate di/dt des Drehzahlminderungsverhältnisses durch die folgende Gleichung unter Verwendung der oben genannten Werte :

$$di/dt = -C_4*(N/V^2)*dV_o/dt*K_{CL}+C_5*(1/V)*dN_o/dt$$

wobei $C_4$ und $C_5$ Konstanten sind ; und
Steuern des Drehzahlminderungsverhältisses unter Verwendung der errechneten Änderungsrate di/dt des Drehzahlminderungsverhältnisses als einem Steuerwert.

4. Verfahren zur Steuerung eines Drehzahlminderungsverhältnisses nach Anspruch 3, wobei das stufenlos einstellbare Getriebe eine durch den Motor angetriebene Hydraulikpumpe und einen durch Hydraulikdruck von der Hydraulikpumpe angetriebenen Hydraulikmotor aufweist und wobei
eine Verdrängung der Hydraulikpumpe und/oder des Hydraulikmotors auf Basis der Änderungsrate di/dt des Drehzahlminderungsverhältnisses einstellbar gesteuert ist.

## Revendications

1. Procédé pour commander le rapport de transmission d'un variateur continu de vitesse comprenant les étapes suivantes :

détermination d'une accélération prévue $dV_o/dt$ calculée à partir de la puissance de réserve du moteur, d'une valeur de référence $dN_o/dt$ du taux de variation de la vitesse du moteur obtenue en se basant sur un paramètre représentant l'intention du conducteur d'accélérer ou de ralentir, d'une vitesse réelle V du véhicule, d'une accélération réelle $dV/dt$, et d'une vitesse réelle N du moteur, calcul d'un taux de variation $di/dt$ du rapport de transmission au moyen d'une équation utilisant les valeurs ci-dessus

$$di/dt = -C_1*N/V^2*(dV_o/dt)+C_2*1/V*(dN_o/dt)+C_3*N/V^2*(dV_o/dt-dV/dt)$$

dans laquelle C1, C2 et C3 sont des constantes ;
commande du rapport de transmission utilisant ledit taux de variation $di/dt$ du rapport de transmission comme paramètre de commande.

2. Procédé pour commander le rapport de transmission selon la revendication 1, dans lequel ledit variateur continu de vitesse comprend une pompe hydraulique entraînée par ledit moteur et un moteur hydraulique entraîné par une pression hydraulique provenant de ladite pompe ;
et dans lequel le mouvement d'au moins l'un desdits pompe hydraulique et moteur hydraulique est commandé de manière variable en se basant sur ledit taux de variation $di/dt$ du rapport de transmission.

3. Procédé pour commander le rapport de transmission d'un variateur continu de vitesse comprenant les étapes suivantes :

détermination d'une accélération prévue $dV_o/dt$ calculée à partir de la puissance de réserve du moteur, d'une valeur de référence $dN_o/dt$ du taux de variation de la vitesse du moteur obtenue en se basant sur un paramètre représentant l'intention du conducteur d'accélérer ou de ralentir, d'une vitesse réelle V du véhicule, d'une accélération réelle $dV/dt$, d'une vitesse réelle N du moteur et d'un taux $K_{CL}$ de transmission d'une puissance de moteur au travers d'un embrayage, en calculant le taux de variation $di/dt$ du rapport de transmission au moyen des équations suivantes utilisant les valeurs ci-dessus

$$di/dt = -C_4*(N/V^2)*dV_o/dt*K_{CL}+C_5*(1/V)*dN_o/dt$$

où $C_4$ et $C_5$ sont des constantes ;
commande dudit rapport de transmission utilisant ledit taux calculé de variation $di/dt$ du rapport de transmission comme paramètre de commande.

4. Procédé pour commander le rapport de transmission selon la revendication 3, dans lequel ledit variateur continu de vitesse comprend une pompe hydraulique entraînée par ledit moteur et un moteur hydraulique entraîné par une pression hydraulique provenant de ladite pompe ;
et dans lequel le mouvement d'au moins l'un desdits pompe hydraulique et moteur hydraulique est commandé de manière variable en se basant sur ledit taux de variation $di/dt$ du rapport de transmission.

Fig. 1

Fig. 2

# F⁻ig. 3

## Fig. 4

```
┌─────────────────┐
│ CLUTCH          │
│ OPENING         │
│ CONTROL         │
└─────────────────┘
         │
         ▼
┌─────────────────┐
│ READ  ACCEL.    │
│ OPENING (Θacc)  │
└─────────────────┘
         │
         ▼
┌─────────────────┐
│ READ            │
│ VEHICLE SPEED   │
└─────────────────┘
         │
         ▼
┌─────────────────┐
│ READ            │
│ TARGET (Θcln)   │
└─────────────────┘
         │
         ▼
┌─────────────────┐
│ CAL. dΘcl       │
└─────────────────┘
         │
         ▼
┌─────────────────┐
│ CAL.            │
│ CONTROL SPEED   │
└─────────────────┘
         │
         ▼
┌─────────────────┐
│ OUTPUT          │
│ CONTROL SIGNAL  │
└─────────────────┘
         │
         ▼
      ( E N D )
```

## Fig. 5A

## Fig. 5B

## F‾ig. 6

```
        ┌─────────────────┐
        │      START       │
        └─────────────────┘
                 │
  S1  ┌─────────────────────┐
      │     READ N, V        │
      └─────────────────────┘
                 │
  S2  ┌─────────────────────┐
      │      CAL. Pa         │
      └─────────────────────┘
                 │
  S3  ┌─────────────────────┐
      │    CAL. dVo/dt       │
      └─────────────────────┘
                 │
  S4  ┌─────────────────────┐
      │    CAL. dia/dt       │
      └─────────────────────┘
                 │
  S5  ┌─────────────────────┐
      │    CAL. dNo/dt       │
      └─────────────────────┘
                 │
  S6  ┌─────────────────────┐
      │    CAL. diN/dt       │
      └─────────────────────┘
                 │
  S7  ┌─────────────────────┐
      │   CAL. d(di/dt)      │
      └─────────────────────┘
                 │
  S8  ┌─────────────────────┐
      │   OUTPUT di/dt       │
      └─────────────────────┘
                 │
        ┌─────────────────┐
        │      END         │
        └─────────────────┘
```

# F ig. 7

## Fig. 8

## Fig. 9

## Fig. 10

START

S1 READ Ne, V

S2 CAL. Pa

S3 CAL. dVo/dt

S4 READ θcl

S5 θcl > θs ? — YES

NO

S6 READ Kcl    S7 Kα = 1

S8 CAL. diα/dt

S9 CAL. dNo/dt

S10 CAL. diN/dt

S11 OUTPUT di/dt

END

## Fig. 11

$I$

$K_{cL}$

Ne1  Ne2 ····· Nen

FULL OPEN    θcl    FULL CLOSE